# EUROPÄISCHE PATENTSCHRIFT

(11) **EP 0 480 255 B1**
(45) Veröffentlichungstag und Bekanntmachung des Hinweises auf die Patenterteilung: **23.06.1993**
(21) Anmeldenummer: 91116421.8
(22) Anmeldetag: 26.09.1991
(51) Int. Cl.: B01J 21/18, B01J 37/08, B01D 53/36

(54) **Katalysator zur Reduzierung von Stickstoffoxiden aus Abgasen und Verfahren zu dessen Herstellung**
Catalyst for the reduction of nitrogen oxides from waste gases and process for the preparation thereof
Catalyseur de réduction des oxydes d'azote dans les gaz à éparer et procédé pour le préparer

(30) Priorität: 09.10.1990 DE 4031968
(43) Veröffentlichungstag der Anmeldung: 15.04.1992
(73) Patentinhaber: BAYER AG, 51368 Leverkusen (DE)
(72) Erfinder: Heins, Hans-Hermann, Dipl.-Phys., W-5090 Leverkusen (DE); Danz, Peter, Dipl.-Ing., W-5000 Köln 50 (DE); Ullrich, Martin Dipl.-Ing., W-5090 Leverkusen (DE); Henkel, Hanno, Dr., W-4150 Krefeld (DE); Holzer, Klaus, Dipl.-Ing., W-5090 Leverkusen 3 (DE); Zirngiebl, Eberhard, Dr., W-5000 Köln 80 (DE); Gruhl, Siegfried, Dr., W-5250 Engelskirchen (DE)

(56) Entgegenhaltungen:
- DE-A- 3 832 635
- DE-A- 3 837 358
- FR-A- 2 231 621
- US-A- 4 067 956

## Beschreibung

Die vorliegende Erfindung betrifft Katalysatoren auf Basis von Kohlenstoff und Stickstoff zur Reduzierung von Stickstoffoxiden aus Abgasen sowie ein Verfahren zur Herstellung derartiger Katalysatoren.

Die selektive Entfernung von Stickstoffoxiden aus Abgasen wird im allgemeinen durch Reduktion mit Ammoniak durchgeführt. Diese Reaktion läuft ohne Katalysator bei Temperaturen um 900°C in der Gasphase ab. Mit speziellen Katalysatoren ist es möglich, diese Temperaturen zu erniedrigen. Hierbei werden möglichst niedrige Temperaturen angestrebt, um ein teures Aufheizen des Rauchgases, inbesondere nach einer Rauchgasentschwefelung, zu vermeiden. Außer einem möglichst vollständigen Umsatz und hohen Katalyseleistungen werden von einem technischen Katalysator lange Standzeiten und niedrige Druckverlustwerte gefordert.

Bestimmte Materialien, wie beispielsweise anorganische Oxide, sind erwünschte Träger mit großer Oberfläche für katalytisch aktive Materialien. Bei vielen katalytischen Verfahren, insbesondere von Gas-Feststoffreaktionen, wird die optimale katalytische Wirksamkeit solcher mit entsprechenden katalytisch wirksamen Elementen dotierten Materialien erst bei höheren Temperaturen erreicht.

Bei dem weit verbreiteten SCR-Verfahren (selective catalytic reduction) mit Katalysatoren auf TiO₂-Grundkörpern werden Temperaturen von oberhalb 300°C benötigt, was teilweise die unwirtschaftliche Wiederaufheizung der Gase erforderlich macht. Die für solche Verfahren geeigneten Katalysatoren (DE-C 2 458 888) sind darüber hinaus teuer in ihrer Herstellung.

Aus der DE-A 2 911 712 ist der katalytische Abbau von NOₓ mit Ammoniak an Aktivkoks bekannt, der bei Temperaturen um 150°C abläuft Nachteilig an diesem Verfahren ist jedoch die Tatsache, daß sehr große Kohlemengen benötigt werden.

Weiterhin ist aus den deutschen Offenlegungsschriften 37 27 642 und 3 727 643 bekannt, daß Katalysatoren auf Kohlenstoffbasis, die schwerlösliche Oxide von bestimmten Metallen enthalten und aus organischen Materialien mit ungesättigten Kohlenstoff-Kohlenstoff-Gruppen durch Pyrolyse hergestellt werden, zur Reduzierung von NOₓ verwendet werden. Nachteilig hierbei ist, daß die Pyrolyse der organischen Materialien sehr aufwendig ist und zu recht inhomogenen Produkten führt.

Aufgabe war es daher, Katalysatoren zur Verfügung zu stellen, die hohe Katalyseleistungen aufweisen, leicht herstellbar sind, bei niedrigen Temperaturen einsetzbar sind und die o.g. Nachteile der bisher bekannten Katalysatoren nicht aufweisen. Eine weitere Aufgabe bestand darin, ein Verfahren zur Herstellung dieser Katalysatoren zur Verfügung zu stellen.

Diese Aufgaben konnten durch die erfindungsgemäßen Katalysatoren sowie das erfindungsgemäße Verfahren gelöst werden.

Gegenstand der Erfindung sind Katalysatoren auf Basis von Kohlenstoff und Stickstoff, die dadurch gekennzeichnet sind, daß sie im wesentlichen aus Aktivkohle oder Aktivkoks, wobei mindestens 10 % der gesamten Porenvolumens durch Poren mit einem Durchmesser von mindestens 100 nm dargestellt werden, basierend auf Graphitstrukturen und darin eingebauten, C-N-Ringstrukturen bildenden Isocyanaten bestehen und daß der Graphitanteil mindestens 90 Gew.-% beträgt.

Vorzugsweise enthalten die Katalysatoren zusätzlich bis zu 1 Gew.-% Vanadiumoxid.

Als polymerisierbare, C-N-Ringstrukturen bildende Isocyanate werden bevorzugt Toluoldiisocyanat, Oligomere des Toluoldiisocyanates und/oder Rückstände aus der Toluoldiisocyanatproduktion eingesetzt.

Gegenstand der Erfindung ist weiterhin ein Verfahren zur Herstellung der erfindungsgemäßen Katalysatoren, welches dadurch gekennzeichnet ist, daß Aktivkohle oder Aktivkoks, wobei mindestens 10 % des gesamten Porenvolumens durch Poren mit einem Durchmesser von mindestens 100 nm dargestellt werden, und aus Graphitstrukturen aufgebaut sind, vorgelegt wird, polymerisierbare, C-N-Ringstrukturen bildende Isocyanate oder Isocyanatrückstände gleichmäßig auf die Aktivkohle oder den Aktivkoks verteilt werden, danach auf Temperaturen von 80-150°C erhitzt wird, anschließend bei 300-500°C getempert wird und dann mit Wasserdampf bei Temperaturen von 700-900°C behandelt wird.

Bevorzugt wird das erfindungsgemäße Verfahren in einem Drehrohr, vorzugsweise diskontinuierlich durchgeführt.

Die erfindungsgemäßen Katalysatoren können auch dadurch hergestellt werden, daß anstelle von Aktivkohle oder Aktivkoks Kohlenstoffpulver oder Aktivkohlepulver vorgelegt wird, polymerisierbare, C-N-Ringstrukturen bildende Isocyanate oder Isocyanatrückstände mit dem Pulver gemischt werden und danach granuliert wird, anschließend das Granulat auf Temperaturen von 80-150°C erhitzt wird, wobei die Isocyanate oder Isocyanatrückstände polymerisieren, und dann bei 300-500°C getempert wird und danach mit Wasserdampf bei Temperaturen von 700-900°C behandelt wird.

Die mit den Isocyanaten behandelte Aktivkohle wird vorzugsweise auf 90-120°C erhitzt, bei 350-450°C bevorzugt getempert und vorzugsweise bei Temperaturen von 750-850°C mit Wasserdampf behandelt.

Die erfindungsgemäßen Katalysatoren werden zur Reduzierung von Stickstoffoxiden aus Abgasen bei tiefen Temperaturen, vorzugsweise bei 100 bis 150°C, verwendet, insbesondere zur Reduzierung von Stickstoffoxiden bei gleichzeitiger Adsorption von Dioxinen und Furanen aus Abgasen.

Ein großer Vorteil der erfindungsgemäßen Katalysatoren besteht darin, daß sie eine große Aktivität aufweisen, wodurch nur geringe Mengen zur Reduzierung von Stickoxiden benötigt werden. Dies wirkt sich gleichzeitig positiv auf den Druckverlust aus, wie z.B. in Festbettschüttungen, die in dem zu reinigenden Abgasstrom installiert sind. Ein weiterer Vorteil der erfindungsgemäßen Katalysatoren besteht darin, daß sie bei tiefen Temperaturen (100-150°C) zur Reduzierung von NOₓ eingesetzt werden können. Damit entfällt meistens auch eine Aufheizung der zu reinigenden Abgase. Des weiteren sind nicht so hohe Anforderungen an die Werkstoffe der entsprechenden Apparate zu stellen.

Die Erfindung soll anhand der folgenden Beispiele näher erläutert werden.

### Beispiel 1 (Herstellung des Katalysators):

Aktivkohle basierend auf Graphitstrukturen wird in einem Drehrohrofen bei Raumtemperatur mit 40 % Toluoldiisocyanat-Rückständen und 4 % Wasser 30 Minuten gemischt. Anschließend wird die Temperatur auf 90°C angehoben. Die Temperatur wird 1 Stunde lang auf 90°C gehalten. Danach wird in 180 Minuten der Ofen auf 500°C hochgeheizt und anschließend die Kohle 120 Minuten bei 800°C mit Wasserdampf behandelt. Das Gesamtporenvolumen des Katalysators betrug 59,1 %. 43,7 % des Porenvolumens bestand aus Poren mit einem Durchmesser größer 100 nm.

### Beispiel 2 (Herstellung des Katalysators):

Steinkohlestaub wird mit der gleichen Menge Toluoldiisocyanat-Rückstand gemischt und durch Extrusion granuliert. Anschließend wird das Granulat im Drehrohrofen eine Stunde auf 120°C erhitzt. Dabei polymerisiert Toluoldiisocyanat. Danach wird das Produkt bei 450°C vier Stunden getempert und zwei Stunden bei 800°C mit Wasserdampf behandelt.

### Beispiel 3 (Reduzierung von NOₓ):

In einer beheizten Kolonne von 35 mm Durchmesser und 400 mm Schütthöhe wurde der Katalysator aus Beispiel 1 bzw. 2 getestet. Dabei wurde Raumluft mit 500 ppm NO und 350 ppm NH₃ versetzt und bei einer Raumgeschwindigkeit von 1000 m³/m³h bei 130°C durch die Katalysatorschicht gefahren. 90 % des NO wurden reduziert.

Im gleichen Versuch wie oben allerdings mit unbehandelten, käuflichen Aktivkohlen auf Graphitbasis werden lediglich 40 % des NO reduziert.

Der gleiche Versuch wurde mit Al₂O₃ als Katalysator durchgeführt. Dazu wurde Al₂O₃ mit 30 % Toluoldiisocyanat-Rückstand getränkt, die Temperatur für 1 Stunde auf etwa 90°C gehalten, anschließend bei 490°C geschwelt und bei 800°C aktiviert. Lediglich 10 % des NO wurden reduziert.

### Beispiel 4

Hinter einer Abfallverbrennungsanlage wurden in einer Kolonne von 400 mm Durchmesser und 1 m Schütthöhe 56 kg des erfindungsgemäßen Katalysators aus Beispiel 1 von unten mit 125 m³/h Rauchgas und Ammoniak beschickt (Raumgeschwindigkeit 1000 m³/m³h). Die Temperatur lag zwischen 120°C am Boden der Kolonne und 140°C am Kopf der Kolonne, die elektrisch beheizt wurde. Die Eintrittsbeladungen schwankten zwischen 200 und 800 ppm NO. Die Zugabe an NH₃ erfolgte in stöchiometrischen Mengen. Etwa 88 % NO wurden reduziert.

## Patentansprüche (Patentansprüche für folgende(n) Vertragsstaat(en): AT, BE, CH, LI, DE, FR, GB, IT, NL, SE)

1. Katalysator auf Basis von Kohlenstoff und Stickstoff, dadurch gekennzeichnet, daß der Katalysator im wesentlichen aus Aktivkohle oder Aktivkoks, wobei mindestens 10 % des gesamten Porenvolumens durch Poren mit einem Durchmesser von mindestens 100 nm dargestellt werden, basierend auf Graphitstrukturen und darin eingebauten C-N-Ringstrukturen aus polymerisierbaren, C-N-Ringstrukturen bildenden Isocyanaten besteht und der Graphitanteil mindestens 90 Gew.-% beträgt.

2. Katalysator gemäß Anspruch 1, dadurch gekennzeichnet, daß der Katalysator zusätzlich Vanadiumoxid bis zu 1 Gew.-% enthält.

3. Katalysator gemäß Anspruch 1 oder 2, dadurch gekennzeichnet, daß als polymerisierbares, C-N-Ringstrukturen bildendes Isocyanat Toluoldiisocyanat, Oligomere des Toluoldiisocyanats und/oder Rückstände aus der Toluoldiisocyanatproduktion eingesetzt werden.

4. Verfahren zur Herstellung von Katalysatoren gemäß einem der Ansprüche 1 bis 3, dadurch gekennzeichnet, daß Aktivkohle oder Aktivkoks, die aus Graphitstrukturen aufgebaut sind, vorgelegt wird, polymerisierbare, C-N-Ringstrukturen bildende Isocyanate oder Isocyanatrückstände gleichmäßig auf die Aktivkohle oder den Aktivkoks verteilt werden, danach auf Temperaturen von 80-150°C erhitzt wird, anschließend bei 300-500°C getempert wird und dann mit Wasserdampf bei Temperaturen von 700-900°C behandelt wird.

5. Verfahren zur Herstellung von Katalysatoren gemäß einem der Ansprüche 1 bis 3, dadurch gekennzeichnet, daß Kohlenstoffpulver oder Aktivkohlepulver vorgelegt wird, polymerisierbare, C-N-Ringstrukturen bildende Isocyanate oder Isocyanatrückstände mit dem Pulver gemischt werden, danach granuliert wird, anschließend das Granulat auf Temperaturen von 80-150°C erhitzt wird, wobei die Isocyanate oder Isocyanatrückstände polymerisieren, dann bei 300-500°C getempert wird und danach mit Wasserdampf bei Temperaturen von 700-900°C behandelt wird.

6. Verfahren gemäß Anspruch 4, dadurch gekennzeichnet, daß das Verfahren in einem Drehrohr durchgeführt wird.

7. Verfahren gemäß einem oder mehreren der Ansprüche 4 bis 6, dadurch gekennzeichnet, daß auf Temperaturen von 90-120°C erhitzt wird, bei 350-450°C getempert wird und mit Wasserdampf bei Temperaturen von 750-850°C behandelt wird.

8. Verwendung des Katalysators gemäß einem der Ansprüche 1 bis 3 zur Reduzierung von Stickoxiden aus Abgasen bei tiefen Temperaturen, vorzugsweise bei 100 bis 150°C.

9. Verwendung des Katalysators gemäß einem der Ansprüche 1 bis 3 zur Reduzierung von Stickoxiden aus Abgasen und zur gleichzeitigen Adsorption von Dioxinen und Furanen aus Abgasen bei tiefen Temperaturen, insbesondere bei 100 bis 150°C.

## Patentansprüche (Patentansprüche für folgende(n) Vertragsstaat(en): ES)

1. Verfahren zur Herstellung von Katalysatoren für die Reduzierung von Stickoxiden aus Abgasen, dadurch gekennzeichnet, daß Aktivkohle oder Aktivkoks, die aus Graphitstrukturen aufgebaut sind, vorgelegt wird, polymerisierbare, C-N-Ringstrukturen bildende Isocyanate oder Isocyanatrückstände gleichmäßig auf die Aktivkohle oder den Aktivkoks verteilt werden, danach auf Temperaturen von 80-150°C erhitzt wird, anschließend bei 300-500°C getempert wird und dann mit Wasserdampf bei Temperaturen von 700-900°C behandelt wird.

2. Verfahren zur Herstellung von Katalysatoren gemäß Anspruch 1, dadurch gekennzeichnet, daß Kohlenstoffpulver oder Aktivkohlepulver vorgelegt wird, polymerisierbare, C-N-Ringstrukturen bildende Isocyanate oder Isocyanatrückstände mit dem Pulver gemischt werden, danach granuliert wird, anschließend das Granulat auf Temperaturen von 80-150°C erhitzt wird, wobei die Isocyanate oder Isocyanatrückstände polymerisieren, dann bei 300-500°C getempert wird und danach mit Wasserdampf bei Temperaturen von 700-900°C behandelt wird.

3. Verfahren gemäß Anspruch 1, dadurch gekennzeichnet, daß das Verfahren in einem Drehrohr durchgeführt wird.

4. Verfahren gemäß einem oder mehreren der Ansprüche 1 bis 3, dadurch gekennzeichnet, daß auf Temperaturen von 90-120°C erhitzt wird, bei 350-450°C getempert wird und mit Wasserdampf bei Temperaturen von 750-850°C behandelt wird.

5. Verfahren zur Reduzierung von Stickoxiden aus Abgasen bei tiefen Temperaturen, vorzugsweise bei 100 bis 150°C, dadurch gekennzeichnet, daß ein nach einem der Ansprüche 1 bis 4 hergestellter Katalysator eingesetzt wird.

6. Verfahren zur Reduzierung von Stickstoffoxiden aus Abgasen und zur gleichzeitigen Adsorption von Dioxinen und Furanen aus Abgasen bei tiefen Temperaturen, insbesondere bei 100 bis 150°C, dadurch gekennzeichnet, daß ein nach einem der Ansprüche 1 bis 4 hergestellter Katalysator eingesetzt wird.

## Claims (Claims for the following Contracting State(s): AT, BE, CH, DE, FR, GB, IT, NL, SE)

1. A catalyst based on carbon and nitrogen, characterized in that the catalyst consists essentially of active carbon or active coke - at least 10% of the total pore volume consisting of pores at least 100 nm in diameter - based on graphite structures and C-N-ring structures incorporated therein of polymerizable isocyanates forming C-N ring structures and in that the percentage graphite content is at least 90% by weight.

2. A catalyst as claimed in claim 1, characterized in that the catalyst additionally contains up to 1% by weight vanadium oxide.

3. A catalyst as claimed in claim 1 or 2, characterized in that toluene diisocyanate, oligomers of toluene diisocyanate and/or residues from the production of toluene diisocyanate are used as the polymerizable isocyanate forming C-N-ring structures.

4. A process for the production of the catalysts claimed in any of claims 1 to 3, characterized in that active carbon or active coke made up of graphite structures is initially introduced, polymerizable isocyanates or isocyanate residues forming C-N-ring structures are uniformly distributed over the active carbon or the active coke which is then heated to temperatures of 80 to 150°C, subsequently conditioned at 300 to 500°C and then treated with steam at temperatures of 700 to 900°C.

5. A process for the production of the catalysts claimed in any of claims 1 to 3, characterized in that carbon powder or active carbon powder is initially introduced, polymerizable isocyanates or isocyanate residues forming C-N-ring structures are mixed with the powder and the mixture is subsequently granulated, the granules are then heated to temperatures of 80 to 150°C, the isocyanates or isocyanate residues polymerizing, after which the granules are conditioned at 300 to 500°C and subsequently treated with steam at temperatures of 700 to 900°C.

6. A process as claimed in claim 4, characterized in that the process is carried out in a rotary kiln.

7. A process as claimed in one or more of claims 4 to 6, characterized in that it comprises the steps of heating to temperatures of 90 to 120°C, conditioning at temperatures of 350 to 450°C and treatment with steam at temperatures of 750 to 850°C.

8. The use of the catalyst claimed in any of claims 1 to 3 for the reduction of nitrogen oxides from waste gases at low temperatures, preferably at 100 to 150°C.

9. The use of the catalyst claimed in any of claims 1 to 3 for the reduction of nitrogen oxides from waste gases and for the simultaneous adsorption of dioxins and furans from waste gases at low temperatures, more particularly at 100 to 150°C.

## Claims (Claims for the following Contracting State(s): ES)

1. A process for the production of catalysts for the reduction of nitrogen oxide from waste gases, characterized in that active carbon or active coke made up of graphite structures is initially introduced, polymerizable isocyanates or isocyanate residues forming C-N-ring structures are uniformly distributed over the active carbon or the active coke which is then heated to temperatures of 80 to 150°C, subsequently conditioned at 300 to 500°C and then treated with steam at temperatures of 700 to 900°C.

2. A process for the production of catalysts as claimed in claim 1, characterized in that carbon powder or active carbon powder is initially introduced, polymerizable isocyanates or isocyanate residues forming C-N-ring structures are mixed with the powder and the mixture is subsequently granulated, the granules are then heated to temperatures of 80 to 150°C, the isocyanates or isocyanate residues polymerizing, after which the granules are conditioned at 300 to 500°C and subsequently treated with steam at temperatures of 700 to 900°C.

3. A process as claimed in claim 1, characterized in that the process is carried out in a rotary kiln.

4. A process as claimed in one or more of claims 1 to 3, characterized in that it comprises the steps of heating to temperatures of 90 to 120°C, conditioning at temperatures of 350 to 450°C and treatment with steam at temperatures of 750 to 850°C.

5. A process for the reduction of nitrogen oxides from waste gases at low temperatures, preferably at 100 to 150°C, characterized in that a catalyst produced by the process claimed in any of claims 1 to 4 is used.

6. A process for the reduction of nitrogen oxides from waste gases and for the simultaneous adsorption of dioxins and furans from waste gases at low temperatures, more particularly at 100 to 150°C, characterized in that a catalyst produced by the process claimed in any of claims 1 to 4 is used.

## Revendications (Revendications pour l'(les) Etat(s) contractant(s) suivant(s): AT, BE, CH, LI, DE, FR, GB, IT, NL, SE)

1. Catalyseur à base de carbone et d'azote, caractérisé en ce que le catalyseur est essentiellement constitué de charbon actif ou de coke activé avec au moins 10% du total du volume des pores formés de pores ayant un diamètre d'au moins 100 nm de structure graphitique, avec des structures cycliques de type C-N incorporées formées d'isocyanates polymérisables constituant des structures cycliques de type C-N tandis que la fraction graphitique est d'au moins 90% en poids.

2. Catalyseur selon la revendication 1, caractérisé en ce que le catalyseur contient en outre de l'oxyde de vanadium jusqu'à 1% en poids au maximum.

3. Catalyseur selon la revendication 1 ou 2, caractérisé en ce que l'on utilise comme isocyanates polymérisables formant des structures cycliques de type C-N du diisocyanate de toluène, des oligomères de diisocyanate de toluène et/ou des résidus de la production du diisocyanate de toluène.

4. Procédé de production de catalyseurs selon l'une des revendications 1 à 3, caractérisé en ce que l'on utilise du charbon actif ou du coke activé présentant des structures graphitiques, que des isocyanates ou des résidus d'isocyanates polymérisables formant des structures cycliques de type C-N sont répartis uniformément sur le charbon actif ou le coke activé, puis que l'on chauffe à des températures entre 80 et 150°C, qu'on effectue ensuite un traitement thermique entre 300 et 500°C et qu'on traite ensuite par la vapeur d'eau à des températures entre 700 et 900°C.

5. Procédé de production de catalyseurs selon l'une des revendications 1 à 3, caractérisé en ce que l'on utilise de la poudre de carbone ou de la poudre de charbon actif, que l'on mélange à cette poudre des isocyanates ou des résidus d'isocyanates polymérisables et formant des structures cycliques de type C-N, qu'on effectue ensuite une granulation, qu'on chauffe ensuite les granulés à des températures entre 80 et 150°C où les isocyanates ou les résidus d'isocyanates sont polylmérisés, puis que l'on effectue un traitement thermique entre 300 et 500°C et qu'on traite ensuite par la vapeur d'eau à des températures entre 700 et 900°C.

6. Procédé selon la revendication 4, caractérisé en ce que l'on met le procédé en oeuvre dans un tube rotatif.

7. Procédé selon une ou plusieurs des revendications 4 à 6, caractérisé en ce que l'on chauffe à des températures entre 90 à 120°C, qu'on effectue le traitement thermique entre 350 et 450°C et que l'on traite par la vapeur d'eau à des températures entre 750 et 850°C.

8. Utilisation des catalyseurs selon l'une des revendications 1 à 3 pour la réduction des oxydes d'azote dans les gaz résiduaires à des basses températures, comprises de préférence entre 100 et 150°C.

9. Utilisation des catalyseurs selon l'une des revendications 1 à 3, pour la réduction des oxydes d'azote dans les gaz résiduaires et pour l'adsorption simultanée des dioxines et des furannes contenus dans les gaz résiduaires à des basses températures, et en particulier entre 100 et 150°C.

## Revendications (Revendications pour l'(les) Etat(s) contractant(s) suivant(s): ES)

1. Procédé de production d'un catalyseur pour la réduction d'oxydes d'azote dans les gaz résiduaires, caractérisé en ce que
l'on utilise du charbon actif ou du coke activé présentant des structures graphitiques, que des isocyanates ou des résidus d'isocyanates polymérisables formant des structures cycliques de type C-N sont répartis uniformément sur le charbon actif ou le coke activé, puis que l'on chauffe à des températures entre 80 et 150°C, qu'on effectue ensuite un traitement thermique entre 300 et 500°C et qu'on traite ensuite par la vapeur d'eau à des températures entre 700 et 900°C.

2. Procédé de production de catalyseurs selon la revendication 1, caractérisé en ce que
l'on utilise de la poudre de carbone ou de la poudre de charbon actif, que l'on mélange à cette poudre des isocyanates ou des résidus d'isocyanates polymérisables et formant des structures cycliques de type C-N, qu'on effectue ensuite une granulation, qu'on chauffe ensuite les granulés à des températures entre 80 et 150°C où les isocyanates ou les résidus d'isocyanates sont polymérises, puis que l'on effectue un traitement thermique entre 300 et 500°C et qu'on traite ensuite par la vapeur d'eau à des températures entre 700 et 900°C.

3. Procédé selon la revendication 1, caractérisé en ce que le procédé est mis en oeuvre dans un tube rotatif.

4. Procédé selon une ou plusieurs des revendications 1 à 3, caractérisé en ce que l'on chauffe à des températures entre 90 et 120°C, que l'on effectue le traitement thermique entre 350 et 450°C et que l'on traite par la vapeur d'eau à des températures entre 750 et 850°C.

5. Procédé de réduction des oxydes d'azote dans les gaz résiduaires à des basses températures comprises de préférence entre 100 et 150°C, caractérisé en ce que l'on utilise un catalyseur fabriqué selon l'une des revendications 1 à 4.

6. Procédé de réduction des oxydes d'azote dans les gaz résiduaires et d'adsorption simultanée des dioxines et des furannes dans les gaz résiduaires à des basses températures, comprises en particulier entre 100 et 150°C, caractérisé en ce que l'on utilise un catalyseur fabriqué selon l'une des revendications 1 à 4.
